# EUROPÄISCHE PATENTSCHRIFT

(11) **EP 1 472 011 B1**
(45) Veröffentlichungstag und Bekanntmachung des Hinweises auf die Patenterteilung: **23.11.2005**
(21) Anmeldenummer: 03737310.7
(22) Anmeldetag: 05.02.2003
(51) Int. Cl.: B05D 5/08, C09D 5/03, C09D 5/00

(54) **VERFAHREN ZUR HERSTELLUNG VON SCHUTZSCHICHTEN MIT SCHMUTZ- UND WASSERABWEISENDEN EIGENSCHAFTEN**
METHOD FOR THE PRODUCTION OF PROTECTIVE LAYERS WITH DIRT AND WATER REPELLING PROPERTIES
PROCEDE POUR REALISER DES COUCHES DE PROTECTION AYANT DES PROPRIETES ANTISALISSURES ET HYDROFUGES

(30) Priorität: 07.02.2002 DE 10205007
(43) Veröffentlichungstag der Anmeldung: 03.11.2004
(73) Patentinhaber: Degussa AG, 40474 Düsseldorf (DE)
(72) Erfinder: OLES, Markus, 45525 Hattingen (DE); NUN, Edwin, 48727 Billerbeck (DE); DRÖSCHER, Michael, 46286 Dorsten (DE)
(74) Vertreter: Lang, Arne
(86) Internationale Anmeldenummer: PCT/EP2003/001109
(87) Internationale Veröffentlichungsnummer: WO 2003/066241

(56) Entgegenhaltungen:
- EP-A- 0 933 388
- EP-A- 1 249 468
- WO-A-00/58410
- WO-A-02/084016
- WO-A-03/008697
- DE-A- 2 503 962
- DE-A- 19 921 885

## Beschreibung

Gegenstand der vorliegenden Erfindung ist ein Verfahren zur Herstellung von schmutz- und wasserabweisenden flächigen Beschichtungen auf Gegenständen, wobei bei der Beschichtung hydrophobe Partikel auf die Oberfläche der Gegenstände aufgebracht werden und so eine Oberflächenstruktur mit Erhebungen auf der Oberfläche der Gegenstände erzeugt wird, die schmutz- und wasserabweisende Eigenschaften aufweist.

Das Prinzip von selbstreinigenden Beschichtungen ist allgemein bekannt. Zum Erzielen einer guten Selbstreinigung einer Oberfläche muss die Oberfläche neben einer sehr hydrophoben Oberfläche auch eine gewisse Rauhigkeit aufweisen. Eine geeignete Kombination aus Struktur und Hydrophobie macht es möglich, dass schon geringe Mengen bewegten Wassers auf der Oberfläche haftende Schmutzpartikel mitnehmen und die Oberfläche reinigen (WO 96/04123; US-P 3,354,022).

Stand der Technik ist gemäß EP 0 933 388, dass für solche selbstreinigenden Oberflächen ein Aspektverhältnis von > 1 und eine Oberflächenenergie von weniger als 20 mN/m erforderlich ist. Das Aspektverhältnis ist hierbei definiert als der Quotient von Höhe zur Breite der Struktur. Vorgenannte Kriterien sind in der Natur, beispielsweise im Lotusblatt, realisiert. Die aus einem hydrophoben wachsartigen Material gebildete Oberfläche der Pflanze weist Erhebungen auf, die einige µm voneinander entfernt sind. Wassertropfen kommen im Wesentlichen nur mit den Spitzen der Erhebungen in Berührung. Solche wasserabstoßenden Oberflächen werden in der Literatur vielfach beschrieben.

CH-PS-268 258 beschreibt ein Verfahren, bei dem durch Aufbringen von Pulvern wie Kaolin, Talkum, Ton oder Silicagel strukturierte Oberflächen erzeugt werden. Die Pulver werden durch Öle und Harze auf Basis von Organosiliziumverbindungen auf der Oberfläche fixiert (Beispiele 1 bis 6).

EP 0 909 747 lehrt ein Verfahren zur Erzeugung einer selbstreinigenden Oberfläche. Die Oberfläche weist hydrophobe Erhebungen mit einer Höhe von 5 bis 200 µm auf. Hergestellt wird eine derartige Oberfläche durch Aufbringen einer Dispersion von Pulverpartikeln und einem inerten Material in einer Siloxan-Lösung und anschließendem Aushärten. Die strukturbildenden Partikel werden also durch ein Hilfsmedium am Substrat fixiert.

WO 00/58410 kommt zu dem Ergebnis, dass es technisch möglich ist, Oberflächen von Gegenständen künstlich selbstreinigend zu machen. Die hierfür nötigen Oberflächenstrukturen aus Erhebungen und Vertiefungen haben einen Abstand zwischen den Erhebungen der Oberflächenstrukturen im Bereich von 0,1 bis 200 µm und eine Höhe der Erhebung im Bereich 0,1 bis 100 µm. Die hierfür verwendeten Materialien müssen aus hydrophoben Polymeren oder dauerhaft hydrophobiertem Material bestehen. Ein Lösen der Teilchen aus der Trägermatrix muss verhindert werden.

Der Einsatz von hydrophoben Materialien, wie perfluorierten Polymeren, zur Herstellung von hydrophoben Oberflächen ist bekannt. Eine Weiterentwicklung dieser Oberflächen besteht darin, die Oberflächen im µm-Bereich bis nm-Bereich zu strukturieren. US PS 5,599,489 offenbart ein Verfahren, bei dem eine Oberfläche durch Beschuss mit Partikeln einer entsprechenden Größe und anschließender Perfluorierung besonders abweisend ausgestattet werden kann. Ein anderes Verfahren beschreibt H. Saito et al. in "Service Coatings International", 4, 1997, S.168 ff. Hier werden Partikel aus Fluorpolymeren auf Metalloberflächen aufgebracht, wobei eine stark erniedrigte Benetzbarkeit der so erzeugten Oberflächen gegenüber Wasser mit einer erheblich reduzierten Vereisungsneigung dargestellt wurde.

Das Prinzip ist der Natur entlehnt. Kleine Kontaktflächen erniedrigen die Van-der Waal's Wechselwirkung, die für die Haftung an ebenen Oberflächen mit niedriger Oberflächenenergie verantwortlich ist. Beispielsweise sind die Blätter der Lotuspflanze mit Erhebungen aus einem Wachs versehen, die die Kontaktfläche zu Wasser herabsetzen.

Verfahren zur Herstellung dieser strukturierten Oberflächen sind ebenfalls bekannt. Neben der detailgetreuen Abformung dieser Strukturen durch eine Masterstruktur im Spritzguss oder Prägeverfahren sind auch Verfahren bekannt, die das Aufbringen von Partikeln auf eine Oberfläche nutzen (US 5 599 489).

In neuerer Zeit ist versucht worden, selbstreinigende Oberflächen auch auf Textilien bereitzustellen. Es wurde gefunden, dass durch Aufbringen von Aerosilen auf Textilien selbstreinigende Oberflächen erzeugt werden können. Die Aerosile werden hierbei mit einem Lösungsmittel in die Polymermatrix der Textilfaser eingebunden.

In DE 101 18 348 werden Polymerfasern mit selbstreinigenden Oberflächen beschrieben, bei denen die selbstreinigende Oberfläche durch Einwirken eines Lösemittels, welches strukturbildende Partikel aufweist, Anlösen der Oberfläche der Polymerfasern durch das Lösemittel, Anheften der strukturbildenden Partikel an die angelöste Oberfläche und Entfernen des Lösemittels, erhalten wird. Der Nachteil dieses Verfahrens besteht darin, dass beim Verarbeiten der Polymerfasern (Spinnen, Stricken etc.) die strukturbildenden Partikel und damit die Struktur, welche die selbstreinigende Oberfläche bewirkt, beschädigt werden können oder unter Umständen sogar ganz verloren gehen können und damit der Selbstreinigungseffekt ebenfalls verloren geht.

In DE 101 18 346 werden textile Flächengebilde mit selbstreinigender und wasserabweisender Oberfläche, aufgebaut aus mindestens einem synthetischen und/oder natürlichen textilen Basismaterial A und einer künstlichen, mindestens teilweise hydrophoben Oberfläche mit Erhebungen und Vertiefungen aus Partikeln, die ohne Klebstoffe, Harze oder Lacke mit dem Basismaterial A fest verbunden sind, beschrieben, die durch Behandlung des Basismaterials A mit zumindest einem Lösemittel, welches die Partikel ungelöst enthält, und Entfernen des Lösemittels, wobei zumindest ein Teil der Partikel mit der Oberfläche des Basismaterials A fest verbunden werden, erhalten werden. Der Nachteil dieses Verfahrens beruht allerdings auf einer sehr aufwendigen Veredelung der Textiloberflächen. Bei diesem Prozess ist es nötig, dass das Lösungsmittel genau auf das Basismaterial der Textilien abgestimmt werden muss. Bei Kleidungsstücken liegen in der Regel aber Mischgewebe vor, wodurch diese Abstimmung zusätzlich kompliziert wird. Bei ungenauer Abstimmung der Lösungsmittel kann es zur Zerstörung von Teilen des Kleidungsstückes kommen. Eine Behandlung der textilen Oberflächen ist also vor dem Schneidern nötig.

Zerstörung von Teilen des Kleidungsstückes kommen. Eine Behandlung der textilen Oberflächen ist also vor dem Schneidern nötig.

All diese Beschichtungen haben den Nachteil, dass sie permanent auf die Gegenstände aufgebracht sind und damit bei einem Verkratzen, einer Verfärbung oder einer andersartigen Beschädigung der Oberfläche bzw. Oberflächenstruktur diese nicht einfach entfernt und wieder neu aufgebracht werden kann. Bei einer solchen Beschädigung muss der Gegenstand entweder erneut behandelt, aufwendig von der Oberflächenstruktur befreit oder entsorgt werden.

WO 00/58410 beschreibt ein Verfahren zur Herstellung von ablösbaren Beschichtungen mit schmutz- und wasserabweisenden Eigenschaften, wobei die selbigen durch Aufsprühen von hydrophoben Alkoholen, wie Nonacosan-10-ol oder Alkandiolen, wie Nonacosan-5,10-diol oder Wachsen hergestellt werden. Diese Beschichtungen sind durch starke mechanische Kräfte wie z. B. Kratzen, Bürsten oder Hochdruckbehandlung mit Wasser oder durch eine Behandlung mit Wasser, welches Detergenzien enthält, die einen Teil der Strukturbildner auflösen, von den Gegenständen zu entfernen. Nachteilig hieran sind die starken Kräfte die notwendig sind, um die Beschichtung mechanisch wieder zu entfernen, so dass immer die Gefahr besteht, dass beim Entfernen der Beschichtung auch der Gegenstand selbst beschädigt wird. Eine Behandlung mit Wasser, welches Detergenzien enthält, kann ebenfalls je nach Beschaffenheit des Gegenstandes zur Beschädigung des selben führen.

In DE 101 35 157 wird ein Verfahren zur Beschichtung von Textilien während eines chemischen Reinigungsvorgangs beschrieben, bei dem strukturbildende Partikel dem Reinigungsmittel zugegeben werden. Als Reinigungsmittel werden relativ aggressive organische Lösungsmittel, wie z. B. Trichlorethylen vorgeschlagen, deren Verwendung zu einer mechanischen Verankerung der Partikel an der Struktur der Textilien führt, was zur Beschädigung des zu beschichtenden Gegenstands führen kann.

EP 1 249 468 A2 beschreibt ein Verfahren zur Herstellung von selbstreinigenden Oberflächen, bei dem eine geeignete, zumindest teilweise hydrophobe Oberflächenstruktur durch Fixieren von Partikeln auf einer Polymeroberfläche geschaffen wird. Dieses ist dadurch gekennzeichnet, dass zumindest ein Lösemittel, welches die Partikel aufweist und welches die Polymeroberfläche anlöst, auf die Polymeroberfläche aufgebracht wird und durch Entfernen des Lösemittels ein Teil der Partikel an der Polymeroberfläche fixiert wird.

Aufgabe der vorliegenden Erfindung war es deshalb ein Verfahren zur Herstellung von schmutz- und wasserabweisenden, flächigen Beschichtungen auf Gegenständen bereitzustellen, mit welchem auch Gegenstände aus empfindlichen Materialien mit einer relativ stabilen aber mit einfachen Mitteln abzulösenden Beschichtung ausgerüstet werden können.

Überraschenderweise wurde gefunden, dass durch Aufbringen von Suspensionen, die einen Alkohol und z. B. hydrophobe strukturbildende Kieselsäurepartikel aufweisen, auf die Oberfläche eines Gegenstands und anschließendes Entfernen des Alkohols Beschichtungen mit schmutz- und wasserabweisenden Eigenschaften erhalten werden können, die relativ stabil bei Beregnung sind, aber auch mit einfachen Mitteln wieder entfernt werden können.

Gegenstand der vorliegenden Erfindung ist deshalb ein Verfahren gemäß Anspruch 1 zur Herstellung von ablösbaren, schmutz- und wasserabweisenden flächigen Beschichtungen auf Gegenständen, wobei bei der Beschichtung hydrophobe Partikel auf die Oberfläche der Gegenstände aufgebracht werden und so eine Oberflächenstruktur mit Erhebungen auf der Oberfläche der Gegenstände erzeugt wird, die schmutz- und wasserabweisende Eigenschaften aufweist, welches dadurch gekennzeichnet ist, dass hydrophobe Partikel, vorzugsweise hydrophobe Kieselsäure, in einem Alkohol suspendiert werden und diese Suspension auf zumindest eine Oberfläche eines Gegenstandes aufgebracht und der Alkohol anschließend entfernt wird.

Ebenso sind Gegenstand der vorliegenden Erfindung Gegenstände, die auf zumindest einer Oberfläche mit einer wasser- und schmutzabweisenden Beschichtung hergestellt nach einem Verfahren gemäß zumindest einem der Ansprüche 1 bis 9 ausgerüstet sind.

Gegenstand der Erfindung ist gemäß Anspruch 12 ein Imprägnierspray, welches eine Suspension von hydrophoben Partikeln aus Kieselsäuren, die eine unregelmäßige Feinstruktur im Nanometerbereich auf ihrer Oberfläche aufweisen und sich aus Primärteilchen zu Agglomeraten oder Aggregaten mit einer Größe von 0,2 bis 100 µm zusammengelagert haben, in einem Alkohol aufweist.

Die vorliegende Erfindung beschreibt ein Verfahren, mit dem ablösbare, schmutz- und wasserabweisende Beschichtungen hergestellt werden können.

Die Erfindung hat den Vorteil, dass auf einfache Art und Weise Gegenstände mit einer schmutz- und wasserabweisenden nicht permanenten Schicht ausgerüstet werden können, wobei die Auswahl der Gegenstände, die mit einer solchen Beschichtung ausgerüstet werden können, nur durch die Verträglichkeit gegenüber Alkoholen bestimmt wird.

Im Gegensatz zu Verfahren gemäß dem Stand der Technik ist die erfindungsgemäße Beschichtung mit einer ablösbaren schmutzabweisenden Schicht relativ schonend, da beim Aufbringen nur Alkohole als Suspensionsbasis eingesetzt werden und da das Ablösen der Beschichtung durch Wasser mit leicht erhöhtem Druck aber eben ohne die Verwendung von Detergenzien erfolgen kann.

Die mittels des erfindungsgemäßen Verfahrens hergestellte Beschichtung ist nicht permanent und eignet sich deshalb besonders gut als Schutzbeschichtung von neuen Gegenständen vor Verschmutzung, z. B. beim Transport oder in den Verkaufsräumen. Die erfindungsgemäßen Schutzbeschichtungen sind aber auch problemlos durch Einwirken von Flüssigkeitstropfen unter erhöhtem Druck wieder ablösbar.

Das Verfahren zur Herstellung von ablösbaren, schmutz- und wasserabweisenden flächigen Beschichtungen auf Gegenständen, die durch Aufprallen von Flüssigkeitstropfen mit einem Impuls größer 12 mNs von der Oberfläche des Gegenstandes und ohne Beschädigung des Gegenstandes entfernt werden können, wobei bei der Beschichtung hydrophobe Partikel auf die Oberfläche der Gegenstände aufgebracht werden und so eine Oberflächenstruktur mit Erhebungen, gebildet durch die Partikel und der Feinstruktur der Partikel, auf der Oberfläche der Gegenstände erzeugt wird, die schmutz- und wasserabweisende Eigenschaften aufweist, zeichnet sich dadurch aus, dass hydrophobe Partikel aus Kieselsäuren, die eine unregelmäßige Feinstruktur im Nanometerbereich auf ihrer Oberfläche aufweisen und sich aus Primärteilchen zu Agglomeraten oder Aggregaten mit einer Größe von 0,2 bis 100 µm zusammengelagert haben, in einem Alkohol suspendiert werden und diese Suspension auf zumindest eine Oberfläche eines Gegenstandes aufgebracht und der Alkohol anschließend entfernt wird und die Auswahl der Gegenstände, die mit einer solchen Beschichtung ausgerüstet werden können, nur durch die Verträglichkeit mit Alkoholen bestimmt wird.

Als Alkohol sind alle bei Raumtemperatur flüssigen Alkohole einsetzbar, insbesondere Methanol, Ethanol und Isopropanol. Ganz besonders bevorzugt wird Ethanol als Alkohol eingesetzt. Es kann aber auch vorteilhaft sein, wenn die Suspension eine Mischung von Alkoholen aufweist.

Das Aufbringen der Suspension auf zumindest eine Oberfläche eines Gegenstandes kann auf eine dem Fachmann bekannte Weise erfolgen. Vorzugsweise erfolgt das Aufbringen der Suspension durch Tauchen des Gegenstandes in die Suspension und anschließendes Abtropfen oder durch Aufsprühen der Suspension auf den Gegenstand. Überraschenderweise können insbesondere durch das Aufbringen der Suspension durch Aufsprühen besonders haltbare Beschichtungen, die eine geringere Kratz- und Abriebempfindlichkeit aufweisen, insbesondere auf Polymeroberflächen, erzeugt werden. Dies liegt möglicherweise daran, dass Alkohol auf Polymeroberflächen den Ladungsausgleich erleichtert und so die lokalen elektrischen Felder reduziert werden. Durch diese Reduktion können sich die Partikel leichter in den immer vorhandenen Oberflächenrauhigkeiten verankern. Beim Sprühvorgang lagern sich die Teilchen aufgrund ihrer kinetischen Energie noch fester in die vorhandenen Oberflächenrauhigkeiten der Polymermatrix ein. Vorzugsweise erfolgt das Aufsprühen der Suspension mittels einer Sprühvorrichtung, die eine Düse mit einem Durchmesser von 0,05 bis 2 mm, bevorzugt mit einem Durchmesser von 0,1 bis 0,9 mm, aufweist. Das Versprühen der Suspension erfolgt bevorzugt mit einem Druck von 1 bis 10 bar.

Das Entfernen des Alkohols erfolgt durch Verdampfung bzw. Verflüchtigung, wobei das Verdampfen bzw. Verflüchtigen durch den Einsatz erhöhter Temperaturen oder durch den Einsatz von Unterdruck bzw. Vakuum beschleunigt werden kann.

Als hydrophobe Partikel werden Kieselsäuren eingesetzt.

Vorzugsweise werden Partikel eingesetzt, die einen mittleren Partikeldurchmesser von 0,02 bis 100 µm, besonders bevorzugt von 0,01 bis 50 µm und ganz besonders bevorzugt von 0,1 bis 30 µm aufweisen. Es werden Partikel eingesetzt, die sich aus Primärteilchen zu Agglomeraten oder Aggregaten mit einer Größe von 0,2 bis 100 µm zusammenlagern.

Es kann vorteilhaft sein, wenn die eingesetzten Partikel eine strukturierte Oberfläche haben. Vorzugsweise werden Partikel, die eine unregelmäßige Feinstruktur im Nanometerbereich, also im Bereich von 1 bis 1000 nm, vorzugsweise von 2 bis 750 nm und ganz besonders bevorzugt von 10 bis 100 nm, auf der Oberfläche aufweisen, eingesetzt. Unter Feinstruktur werden Strukturen verstanden, die Höhen, Breiten und Abstände in den genannten Bereichen aufweisen. Solche Partikel weisen vorzugsweise zumindest eine Verbindung, ausgewählt aus pyrogener Kieselsäure oder Fällungskieselsäuren auf.

Die hydrophoben Eigenschaften der Partikel können durch das verwendete Material der Partikel inhärent vorhanden sein. Es können aber auch hydrophobe Partikel eingesetzt werden, die nach einer geeigneten Behandlung hydrophobe Eigenschaften aufweisen, wie z. B. mit zumindest einer Verbindung aus der Gruppe der Alkylsilane, der Fluoralkylsilane oder der Disilazane behandelte Partikel. Als Partikel eignen sich im Besonderen hydrophobierte pyrogene Kieselsäuren, sogenannte Aerosile. Beispiel für hydrophobe Partikel sind z. B. das Aerosil VPR 411 oder Aerosil R 8200. Beispiele für durch eine Behandlung mit Perfluoralkylsilan und anschließende Temperung hydrophobierbare Partikel sind z. B. Aeroperl 90/30, Sipernat Kieselsäure 350 oder Aeroperl P 25/20.

Die mittels des erfindungsgemäßen Verfahrens hergestellten Beschichtungen sind schmutz- und wasserabweisend und weisen vorzugsweise Erhebungen, gebildet durch die Partikel und gegebenenfalls die Feinstruktur der Partikel, mit einer mittleren Höhe von 50 nm bis 25 µm und einem mittleren Abstand von 50 nm bis 25 µm, vorzugsweise mit einer mittleren Höhe von 100 nm bis 10 µm und/oder einem mittleren Abstand von 100 nm bis 10 µm und ganz besonders bevorzugt mit einer mittleren Höhe von 100 nm bis 4 µm und/oder einen mittleren Abstand von 100 nm bis 4 µm auf. Ganz besonders bevorzugt weisen die erfindungsgemäßen Beschichtungen Erhebungen mit einer mittleren Höhe von 0,3 bis 1 µm und einem mittleren Abstand von 0,3 bis 1 µm auf. Unter dem mittleren Abstand der Erhebungen wird im Sinne der vorliegenden Erfindung der Abstand der höchsten Erhebung einer Erhebung zur nächsten höchsten Erhebung verstanden. Hat eine Erhebung die Form eines Kegels so stellt die Spitze des Kegels die höchste Erhebung der Erhebung dar. Handelt es sich bei der Erhebung um einen Quader, so stellte die oberste Fläche des Quaders die höchste Erhebung der Erhebung dar. Die mittlere Breite der Erhebungen beträgt vorzugsweise von 50 nm bis 25 µm, bevorzugt von 100 nm bis 10 µm und ganz besonders bevorzugt 0,3 bis 1 µm. Die mittlere Breite der Erhebungen wird in halber Höhe der Erhebungen gemessen und über die kleinste und größte Breite gemittelt. Die mittlere Breite eines Kegels oder eines Zylinders entspricht somit dem Durchmesser des Zylinders bzw. Kegels in halber Höhe. Die mittlere Breite eines Würfels ergibt sich als das Mittel aus Länge der Seitenfläche plus Länge der Flächendiagonalen.

Die mittels des erfindungsgemäßen Verfahrens hergestellten Oberflächen weisen vorzugsweise einen Randwinkel für Wasser von größer 145 °, bevorzugt größer 150 °, besonders bevorzugt größer 155 ° und ganz besonders bevorzugt größer 160 ° auf.

Die erfindungsgemäßen Beschichtungen lassen sich auf einfache Weise durch einem Wasserstrahl wieder von dem beschichteten Gegenstand ablösen. Vorzugsweise ist die Beschichtung mittels eines Wasserstrahls vom Gegenstand ablösbar, der einen Impuls größer 12 mNs und kleiner 60 mNs vorzugsweise kleiner 30 mNs und größer 15 mNs hat. Zum Ablösen der Beschichtung sind keine Detergenzien im Wasser notwendig.

Mittels des erfindungsgemäßen Verfahrens können Gegenstände, die auf zumindest einer Wasserstrahl wieder von dem beschichteten Gegenstand ablösen. Vorzugsweise ist die Beschichtung mittels eines Wasserstrahls vom Gegenstand ablösbar, der einen Impuls größer 12 mNs und kleiner 60 mNs vorzugsweise kleiner 30 mNs und größer 15 mNs hat. Zum Ablösen der Beschichtung sind keine Detergenzien im Wasser notwendig.

Mittels des erfindungsgemäßen Verfahrens können Gegenstände, die auf zumindest einer Oberfläche mit einer wasser- und schmutzabweisenden Beschichtung ausgerüstet sind, hergestellt werden. Die Gegenstände bzw. die zu beschichtende Oberflächen können aus den unterschiedlichsten Stoffen, wie z. B. Metall, Kunststoff, Polymer, Holz, Keramik oder Glas bestehen.

Die erfindungsgemäße Schutzbeschichtung für Gegenstände, wobei die Beschichtung wasser- und schmutzabweisenden Eigenschaften aufweist und die z. B. gemäß dem erfindungsgemäßen Verfahren hergestellt werden kann, kann durch Behandlung mit Flüssigkeitstropfen, die mit einem Impuls größer 12 mNs auf die Oberfläche auftreffen, auf einfache Weise von der Oberfläche des Gegenstandes entfernt werden. Dieser Wert entspricht dem Impuls eines Regentropfen der mit der doppelten Geschwindigkeit zur Erde fällt wie er in der Natur normalerweise vorzufinden ist. Die Schutzbeschichtung ist also in normalem Regen stabil.

Die erfindungsgemäße Schutzbeschichtung kann z. B. zum Schutz von Gegenständen, wie z. B. Transportmittel, wie z. B. Schiffe, Flugzeuge oder Kraftfahrzeuge, wie z. B. Autos, Busse. Lastkraftwagen, Motorräder oder Fahrräder, oder Werkzeugmaschinen vor Verschmutzung beim Transport und in Verkaufsräumen eingesetzt werden.

Das erfindungsgemäße Verfahren kann zur Beschichtung von Gegenständen, die hohen Belastungen durch Schmutz und Wasser ausgesetzt sind, insbesondere für den Outdoor Bereich, Skisport, Alpinsport, Motorsport, Motorradsport, Motorcrosssport, Segelsport, Textilien für den Freizeitbereich sowie zur Beschichtung technischer Textilien, ausgewählt aus Zelten, Markisen, Regenschirmen, Tischdecken, Kabrio-Verdecken, technischen Textilien oder Arbeitskleidung verwendet werden.

Das erfindungsgemäße Verfahren kann außerdem in Imprägniersprays Verwendung finden. Mit solchen Sprays lassen sich z. B. Gartenmöbel, Autofelgen, Autolacke, Duschen, Fliesen, Flächen im Sanitärbereich allgemein, Waschküchen und ähnliches mit ablösbaren schmutz- und wasserabweisenden Beschichtungen ausrüsten. Ein solches Imprägnierspray weist als Wirkstoff vorzugsweise eine Suspension von hydrophoben Partikeln aus Kieselsäuren, die eine unregelmäßige Feinstruktur im Nanometerbereich auf ihrer Oberfläche aufweisen und sich aus Primärteilchen zu Agglomeraten oder Aggregaten mit einer Größe von 0,2 bis 100 µm zusammengelagert haben, in einem Alkohol wie oben beschrieben auf.

Das erfindungsgemäße Verfahren sowie seine Verwendung wird im Folgenden beispielhaft beschrieben, ohne dass die Erfindung darauf beschränkt sein soll.

An Hand der Figuren Fig. 1 bis 4 wird das erfindungsgemäße Verfahren und die erfindungsgemäße Beschichtung näher erläutert, ohne darauf beschränkt zu sein.

Fig. 1 zeigt eine Rasterelektronenmikroskopische Aufnahme einer PET-Folie, die entsprechend Beispiel 1 in eine Suspension aus 1 % Aerosil R8200 in Ethanol getaucht wurde. Fig. 2 zeigt eine Aufnahme des selben Gegenstandes, der mit einem Wasserstrahl mit einem Impuls von 15 mNs, gemäß Beispiel 2 von der Beschichtung befreit wurde. Es zeigt sich, dass die Beschichtung ohne Beschädigung des Gegenstandes vollständig von diesem abgelöst werden konnte.

Fig. 3 zeigt eine Rasterelektronenmikroskopische Aufnahme einer PET-Folie, die entsprechend Beispiel 3 mit einer erfindungsgemäßen Beschichtung ausgerüstet worden ist. Fig. 4 zeigt eine Aufnahme des selben Gegenstandes, der mit einem Wasserstrahl mit einem Impuls von 20 mNs, gemäß Beispiel 4 von der Beschichtung befreit wurde. Es zeigt sich, dass die Beschichtung ohne Beschädigung des Gegenstandes vollständig von diesem abgelöst werden konnte.

### Beispiel 1:

Eine Folie aus Polyethylenterephthalat (PET-Folie) wird in eine Suspension aus 1 % Aerosil R8200 (Degussa AG) in Ethanol getaucht. Nach dem Abtropfen wird die erhaltene Beschichtung getrocknet. Es wurden Versuche zur Selbstreinigung durchgeführt, wobei sich gezeigt hat, dass Russ, der auf die Beschichtung aufgebracht wurde, durch Beregnen der Beschichtung abgewaschen werden konnte. Der gemessene Randwinkel eines Wassertropfens auf der Oberfläche betrug 153 ° und bei einem Winkel von 4° zur Horizontalen rollte ein 60 µl Wassertropfen von der Ebene ab. Durch das Beregnen konnte keine Veränderung der Beschichtung festgestellt werden (Fig.1).

### Beispiel 2:

Der beschichtete Gegenstand aus Beispiel 1 wurde mit einem Wasserstrahl von der Beschichtung befreit. Der Wasserstrahl wies einen Impuls von 15 mNs auf. Nach der Behandlung mit dem Wasserstrahl konnte festgestellt werden, dass die Beschichtung vollständig entfernt worden war (Fig.2).

### Beispiel 3:

Eine PET-Folie wie in Beispiel 1 wird mit dem Inhalt einer Sprühdose besprüht, die eine Suspension aus 1,5 % hydrophober Kieselsäure (Aerosil R8200, Degussa AG) in Ethanol und ein Treibmittel (Drivosol®, Hersteller Degussa AG) unter einem Druck von 3,2 bar aufweist. Der Durchmesser der Düse der Sprühdose betrug 0,5 mm. Es wurden wiederum Versuche zur Selbstreinigung durchgeführt, wobei sich gezeigt hat, dass Russ, der auf die Beschichtung aufgebracht wurde, durch Beregnen der Beschichtung abgewaschen werden konnte. Der Abrollwinkel eines 60 µl Tropfens betrug 0,2 ° und die Randwinkel (Fortschreit- und Rückzugswinkel) betrugen 160,2 ° und 160 °. Durch das Beregnen konnte keine Veränderung der Beschichtung festgestellt werden (Fig.3).

### Beispiel 4:

Es wurde versucht, die Platte aus Beispiel 3 entsprechend Beispiel 2 von der Beschichtung zu befreien. Es konnte festgestellt werden, dass die Beschichtung sich bei den in Beispiel 2 gewählten Parametern nicht Ablösen ließ. Erst als der Wasserstrahl einen Impuls von 20 mNs aufwies konnte die Beschichtung vollständig von der Platte entfernt werden (Fig. 4).

## Patentansprüche

1. Verfahren zur Herstellung von ablösbaren schmutz- und wasserabweisenden flächigen Beschichtungen auf Gegenständen, die durch Aufprallen von Flüssigkeitstropfen mit einem Impuls größer 12 mNs von der Oberfläche des Gegenstandes und ohne Beschädigung des Gegenstandes entfernt werden können, wobei bei der Beschichtung hydrophobe Partikel auf die Oberfläche der Gegenstände aufgebracht werden und so eine Oberflächenstruktur mit Erhebungen, gebildet durch die Partikel und der Feinstruktur der Partikel, auf der Oberfläche der Gegenstände erzeugt wird, die schmutz- und wasserabweisende Eigenschaften aufweist,
**dadurch gekennzeichnet,**
**dass** hydrophoben Partikel aus Kieselsäuren, die eine unregelmäßige Feinstruktur im Nanometerbereich auf ihrer Oberfläche aufweisen und sich aus Primärteilchen zu Agglomeraten oder Aggregaten mit einer Größe von 0,2 bis 100 µm zusammengelagert haben, in einem Alkohol suspendiert werden und diese Suspension auf zumindest eine Oberfläche eines Gegenstandes aufgebracht und der Alkohol anschließend entfernt wird und die Auswahl der Gegenstände, die mit einer solchen Beschichtung ausgerüstet werden können, nur durch die Verträglichkeit mit Alkoholen bestimmt wird.

2. Verfahren gemäß Anspruch 1,
**dadurch gekennzeichnet,**
**dass** als Alkohol Methanol, Ethanol oder Isopropanol eingesetzt wird.

3. Verfahren gemäß Anspruch 1 oder 2,
**dadurch gekennzeichnet,**
**dass** das Aufbringen der Suspension auf zumindest eine Oberfläche eines Gegenstandes durch Tauchen des Gegenstandes in die Suspension erfolgt.

4. Verfahren gemäß Anspruch 1 oder 2,
**dadurch gekennzeichnet,**
**dass** das Aufbringen der Suspension auf zumindest eine Oberfläche eines Gegenstandes durch Aufsprühen der Suspension auf den Gegenstand erfolgt.

5. Verfahren nach mindestens einem der Ansprüche 1 bis 4,
**dadurch gekennzeichnet,**
**dass** Partikel, die einen mittleren Partikeldurchmesser von 0,1 bis 30 µm aufweisen, eingesetzt werden.

6. Verfahren nach mindestens einem der Ansprüche 1 bis 5,
**dadurch gekennzeichnet,**
**dass** die Partikel durch eine Behandlung mit zumindest einer Verbindung aus der Gruppe der Alkylsilane, Fluoralkylsilane und/oder Disilazane mit hydrophoben Eigenschaften ausgestattet werden.

7. Verfahren nach mindestens einem der Ansprüche 1 bis 6,
**dadurch gekennzeichnet,**
**dass** die Suspension auf zumindest eine Oberfläche eines Gegenstandes aufgebracht wird, die aus Metall, Polymer, Holz, Keramik oder Glas besteht.

8. Verfahren nach mindestens einem der Ansprüche 1 bis 7,
**dadurch gekennzeichnet,**
**dass** eine Suspension, die von 0,5 bis 5 Gew.-% hydrophobe Partikel in Alkohol aufweist, eingesetzt wird.

9. Verfahren nach mindestens einem der Ansprüche 1 bis 8,
**dadurch gekennzeichnet,**
**dass** die Suspension auf zumindest eine Oberfläche eines Gegenstandes, der hohen Belastungen durch Schmutz und Wasser ausgesetzt ist, aufgebracht wird.

10. Gegenstände, die auf zumindest einer Oberfläche mit einer wasser- und schmutzabweisenden Beschichtung hergestellt nach einem Verfahren gemäß zumindest einem der Ansprüche 1 bis 9 ausgerüstet sind.

11. Gegenstände nach Anspruch 10,
**dadurch gekennzeichnet,**
**dass** die Oberfläche Erhebungen, gebildet durch die Partikel und der Feinstruktur der Partikel, mit einer mittleren Höhe von 50 nm bis 25 µm und einen mittleren Abstand von 50 nm bis 25 µm aufweist.

12. Imprägnierspray, welches eine Suspension von hydrophoben Partikeln aus Kieselsäuren, die eine unregelmäßige Feinstruktur im Nanometerbereich auf ihrer Oberfläche aufweisen und sich aus Primärteilchen zu Agglomeraten oder Aggregaten mit einer Größe von 0,2 bis 100 µm zusammengelagert haben, in einem Alkohol aufweist.

## Claims

1. A process for producing a removable dirt- and water-repellent surface coating on an article, said coating being removable from the surface of the article without damaging the article, by subjecting it to impact from liquid droplets with a momentum greater than 12 mNs, hydrophobic particles being applied to the surface of the article during the coating process, thus generating a surface structure with elevations formed by the particles and their fine structure on the surface of the article, said surface structure having dirt- and water-repellent properties, **characterized in that** hydrophobic particles of silicas which have an irregular fine structure in the nanometer range on their surface and have collected together from primary particles to form agglomerates or aggregates having a size of from 0.2 to 100 µm are suspended in an alcohol, this suspension is applied to at least one surface of an article and the alcohol is subsequently removed, and the selection of the article which can be provided with such a coating is determined only by the compatibility with alcohols.

2. A process according to claim 1, **characterized in that** methanol, ethanol or isopropanol is used as alcohol.

3. A process according to either of claims 1 and 2, **characterized in that** the suspension is applied to at least one surface of an article by dipping the article into the suspension.

4. A process according to either of claims 1 and 2, **characterized in that** the suspension is applied to at least one surface of an article by spraying the suspension onto the article.

5. A process according to at least one of claims 1 to 4, **characterized in that** use is made of particles whose average diameter is from 0.1 to 30 µm.

6. A process according to at least one of claims 1 to 5, **characterized in that** the particles are provided with hydrophobic properties by treatment with at least one alkylsilane, fluoroalkylsilane and/or disilazane.

7. A process according to at least one of claims 1 to 6, **characterized in that** the suspension is applied to at least one surface of an article made of metal, polymer, wood, ceramic or glass.

8. A process according to at least one of claims 1 to 7, **characterized in that** a suspension containing from 0.5 to 5% by weight of hydrophobic particles in alcohol is used.

9. A process according to at least one of claims 1 to 8, **characterized in that** the suspension is applied to at least one surface of an article exposed to a high level of contamination by dirt and water.

10. An article provided on at least one surface with a water- and dirt-repellent coating produced by a process according to at least one of claims 1 to 9.

11. An article according to claim 10, **characterized in that** the surface has elevations, formed by the particles and their fine structure, having an average height of from 50 nm to 25 µm and an average spacing of from 50 nm to 25 µm.

12. An impregnation spray which comprises a suspension in an alcohol of hydrophobic particles of silicas which have an irregular fine structure in the nanometer range on their surface and have collected together from primary particles to form agglomerates or aggregates having a size of from 0.2 to 100 µm.

## Revendications

1. Procédé pour réaliser des revêtements superficiels amovibles, antisalissures et hydrophobes, sur des objets, qui peuvent être enlevés, par impact de gouttes de liquide avec une impulsion supérieure à 12 mNs, de la surface de l'objet et sans détérioration de celui-ci, dans lequel, pour le revêtement, des particules hydrophobes sont appliquées sur la surface de l'objet et on réalise ainsi à la surface des objets une structure superficielle comportant des reliefs formés par les particules et avec la fine structure de celles-ci, qui possède des propriétés antisalissures et hydrophobes,
**caractérisé en ce que**
des particules hydrophobes constituées d'acides siliques, qui possèdent une fine structure irrégulière de l'ordre du nanomètre sur leur surface et se sont regroupées, à partir de particules primaires, en agglomérats ou agrégats d'une grandeur de 0,2 à 100 µm, sont suspendues dans un alcool et cette suspension est appliquée sur au moins une surface d'un objet et l'alcool est ensuite éliminé et le choix des objets qui peuvent être munis d'un tel revêtement est déterminé seulement par la compatibilité avec les alcools.

2. Procédé selon la revendication 1,
**caractérisé en ce que**
comme alcool, on utilise du méthanol, de l'éthanol ou de l'isopropanol.

3. Procédé selon la revendication 1 ou 2,
**caractérisé en ce que**
l'application de la suspension sur au moins une surface d'un objet est réalisée par immersion de l'objet dans la suspension.

4. Procédé selon la revendication 1 ou 2,
**caractérisé en ce que**
l'application de la suspension sur au moins une surface d'un objet est réalisée par pulvérisation de la suspension sur l'objet.

5. Procédé selon au moins l'une quelconque des revendications 1 à 4,
**caractérisé en ce que**
les particules utilisées présentent un diamètre moyen de particule de 0,1 à 30 µm.

6. Procédé selon au moins l'une quelconque des revendications 1 à 5,
**caractérisé en ce que**
les particules acquièrent des propriétés hydrophobes par traitement avec au moins un composé du groupe constitué par les alkylsilanes, les fluoroalkylsilanes et/ou les disilazanes.

7. Procédé selon au moins l'une quelconque des revendications 1 à 6,
**caractérisé en ce que**
la suspension est appliquée sur au moins une surface d'un objet qui est constituée de métal, de polymère, de bois, de céramique ou de verre.

8. Procédé selon au moins l'une quelconque des revendications 1 à 7,
**caractérisé en ce qu'**
une suspension qui comporte de 0,5 à 5 % en poids de particules hydrophobes dans de l'alcool est utilisée.

9. Procédé selon au moins l'une quelconque des revendications 1 à 8,
**caractérisé en ce que**
la suspension est appliquée sur au moins une surface d'un objet qui est exposée à des sollicitations élevées par la saleté et l'eau.

10. Objets qui sont munis sur au moins une surface d'un revêtement hydrophobe et antisalissures réalisé selon un procédé selon au moins l'une quelconque des revendications 1 à 9.

11. Objets selon la revendication 10,
**caractérisés en ce que**
la surface présente des reliefs formés par les particules et avec la fine structure de celles-ci, ayant une hauteur moyenne de 50 nm à 25 µm et un espacement moyen de 50 nm à 25 µm.

12. Aérosol d'imprégnation qui présente une suspension de particules hydrophobes constituées d'acides siliques, qui possèdent une fine structure irrégulière de l'ordre du nanomètre sur leur surface et se sont regroupées, à partir de particules primaires, en agglomérats ou agrégats d'une grandeur de 0,2 à 100 µm, dans un alcool.
